Europäisches Patentamt

European Patent Office

Office européen des brevets

(11) Publication number: **0 311 358**
**A2**

# (12) EUROPEAN PATENT APPLICATION

(21) Application number: **88309244.7**

(22) Date of filing: **05.10.88**

(51) Int. Cl.⁴: **G03B 17/12 , G03B 11/00**

(30) Priority: **06.10.87 GB 8723373**

(43) Date of publication of application:
**12.04.89 Bulletin 89/15**

(84) Designated Contracting States:
**DE FR GB IT**

(71) Applicant: **Vickers, Ronald**
**347 Leeds Road**
**Nelson Lancashire BB9 8RP(GB)**

(72) Inventor: **Vickers, Ronald**
**347 Leeds Road**
**Nelson Lancashire BB9 8RP(GB)**

(74) Representative: **Sherrard-Smith, Hugh et al**
**Appleyard, Lees & Co. 15 Clare Road**
**Halifax, HX1 2HY West Yorkshire(GB)**

(54) **Filter arrangements.**

(57) A pivotable operating panel 36 is pushed inwardly to cause a filter holder 12 to pivot inwardly until a pair of spaced flanges 60 have passed over and beneath a pair of cams 62 projecting downwardly and outwardly from the mountings 52 of an opposite operating panel 38. The filter holder 12 is released from the position shown by pivoting the operating panel 38 slightly inwardly until the cams 62 clear the flanges 60 and the filter holder 12 is able to pivot in an anti-clockwise direction under a spring force until it lies against the operating panel 36.

FIG 6

EP 0 311 358 A2

## FILTER ARRANGEMENTS.

The present invention relates to a filter arrangement and to a method of operating a filter arrangement.

It is known to mount Colour filters over the end of lenses in order to give a special effect to a photograph being taken. However, each filter has to be inserted into a frame located over the end of a lens when it is desired to be used, and removed from that frame when it is no longer required, or another filter is to be used. The loading and unloading of these filters is time consuming and necessitates a photographer requiring a stock of appropriate filters to be kept near the camera in order to try and insert or replace filters.

It is one object of the present invention to attempt to overcome at least some of these disadvantages.

According to one aspect of the present invention a filter arrangement includes a filter portion connected to a support, the filter portion being movable between a first position, in which the filter portion is clear of a light path, and a second position, in which the filter portion extends across the light path.

The arrangement may include retention means arranged to retain the filter portion in the second position, and the retention means may be automatically applied when the filter portion moves from the first to the second position.

The arrangement may include a plurality of filter portions each of which are movable between the first and second positions. The retention means for one of the filter portions may be associated with another filter portion.

The arrangement may include biasing means arranged to bias the or each carrier from the second to the first position.

An operating member may be associated with the or each filter portion of which, when moved, may be capable of moving the associated filter portion from the first to the second position.

The or each filter portion may be arranged to move at least partially in the direction of the light path when moving from the first to the second position.

The filter portion may comprise a carrier on which a filter is capable of being mounted.

According to another aspect of the present invention a method of operating a filter arrangement including a filter portion connected to a support comprises moving the filter portion from a first position, in which the filter portion is clear of the light path, to a second position, in which the filter portion extends across a light path.

The method may further include retaining the filter portion in the second position.

The method may comprise moving one of a selected number of filter portions from the first to the second position. The method may comprise moving one filter portion from the first position to the second position, with the one filter portion being arranged to be retained in the second position by co-operation with a part associated with another filter portion. The method may comprise allowing the one filter portion to return from the second position to the first position by at least partially moving another filter portion, or an operating member associated with another filter portion.

The method may comprise moving the or each filter portion at least partially in the direction of the light path when moving from the first to the second position.

The invention may be carried into practice in various ways, but one embodiment will now be described by way of example and with reference to the accompanying drawings, in which:-

Figure 1 is a side view of the filter hood 10;

Figure 2 is a rear view of the filter hood 10;

Figure 3 a side sectional view taken on the line II-II of Figure 2 with each of the three filter holders 12, 14 and 16 shown being in the open position;

Figure 4 is a view similar to Figure 3 showing only the filter holders 12 and 14, with the filter holder 12 being moved towards a closed position;

Figure 5 is a view similar to Figure 4 with the filter holder 12 almost in the closed position, and

Figure 6 is a view similar to Figure 5 with the filter holder 12 locked in the closed position.

The filter hood 10 comprises a frame 20, the base 22 of which is arranged to be mounted over the lens of a filter camera, video camera or enlarger lens such that an annular opening 24 of the base is aligned over the lens.

The frame 20 includes four sides 26, 28, 30 and 32 which extend upwardly and outwardly from each of the four sides of the base 22 and each side includes a cutout portion 34 which gives access to the outwardly facing surface of an operating panel 36, 38, 40 or 42 each of which are associated with a different filter holder 12, 14, 16 and 18.

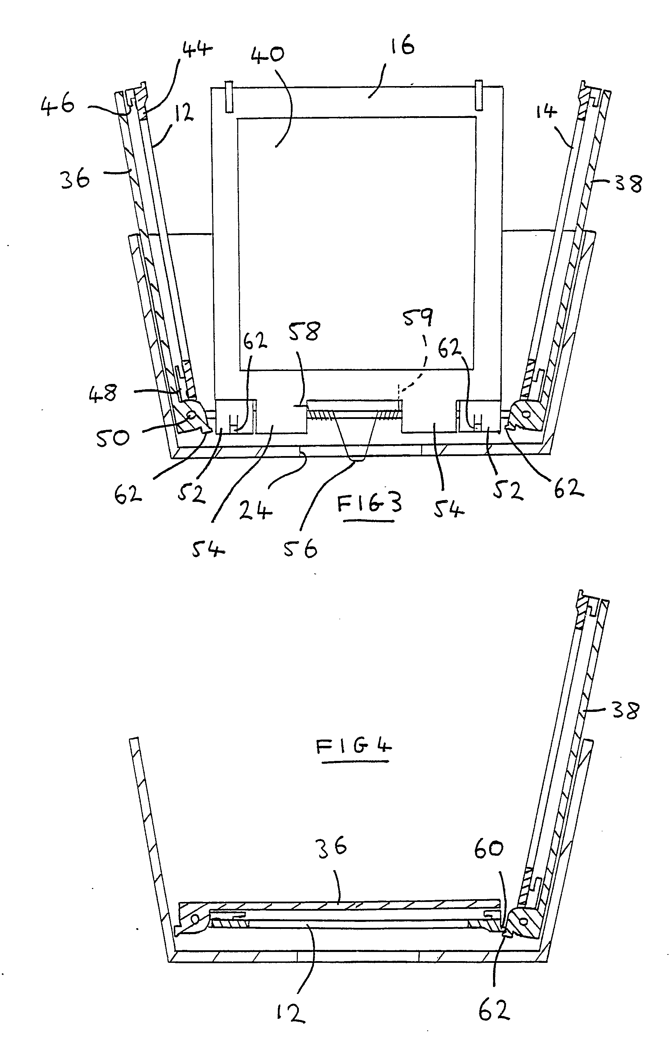

The insertion of a filter into a filter holder will now be described with reference to the filter holder 12 shown in Figure 3, but it will be appreciated that the filter holder 12, 14, 16 and 18 are identical in construction and so the fitting of a filter to the other filter holders is identical.

The filter holder 12 includes a peripheral frame 44. A pair of spaced lugs 46 extend rearwardly and downwardly from the top of the frame 44 and a pair of spaced lugs 48 extend rearwardly and upwardly from the bottom of the frame 44. A square filter (not shown) is arranged to be located within and between the lugs 46 and 48 such that the filter lies against and over the rear of the peripheral frame 44. The filters can be bent slightly when locating them between the lugs.

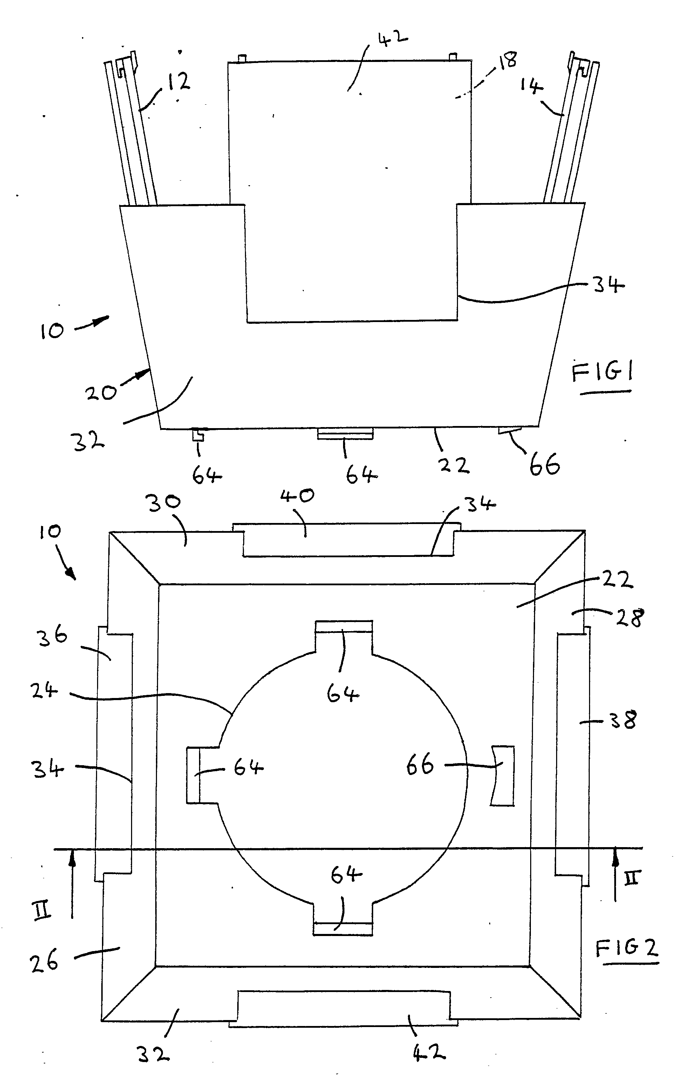

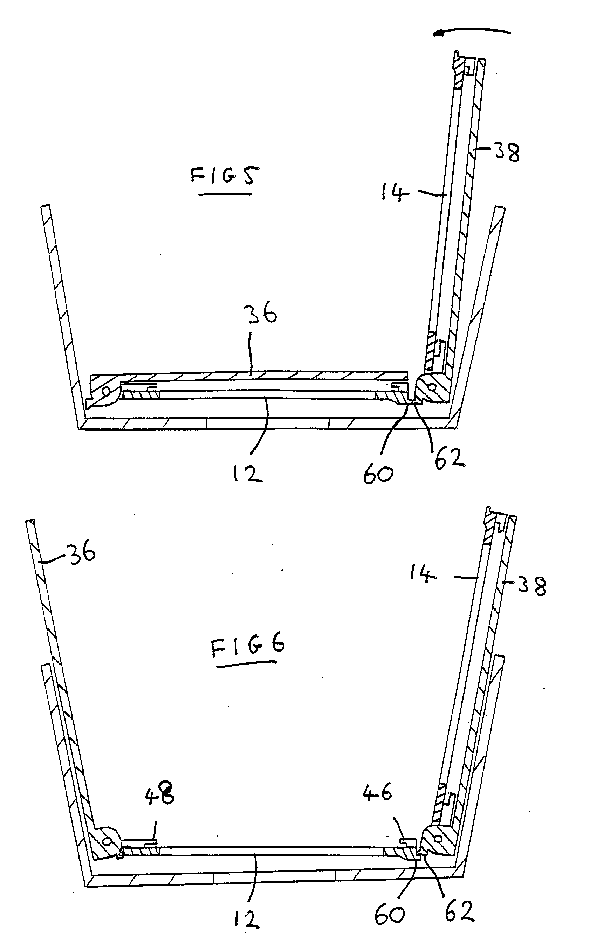

In Figures 1, 2 and 3 each of the filter holders are shown in the open position with light being free to travel through the opening 24 in the base without passing through a filter. Figure 6 shows the filter holder 12 locked in the closed position with light passing to a lens through the opening 24 having first to pass through a filter extending between the lugs 46 and 48.

The holder 12 and the operating panel 36 located behind the holder in Figure 3 are both pivotally mounted on a shaft 50. The panel 36 has a pair of spaced mountings 52 through which the shaft 50 extends and the holder 12 has a pair of spaced mountings 54 through which the shaft extends, the mountings 54 being located between the mountings 52 (as shown in Figure 3 in relation to the holder 16 and operating panel 40). A spring 56 bears against the opening 24 at a mid region and is wound around the shaft 50 such that one end 58 bears against the holder and the other end 59 bears against the operating panel (again this is shown in Figure 3 in relation to the holder 16 and the panel 40), to bias the holder and panel upwardly and outwardly.

The sequence of moving the filter holder 12 to the closed position shown in Figure 6 from the open position shown in Figure 3 will now be described but it will be appreciated that the other holders can be moved in the same manner.

The operating panel 36 is pushed inwardly, and bears against the lugs 46 and 48 to cause both the panel and filter holder to be pivoted in a clockwise direction to the position shown in Figure 4. In that position a pair of spaced flanges 60 extending outwardly from the top of the filter holder 12 bear against a pair of cams 62 projecting downwardly and outwardly from the mountings 52 on the opposite operating panel 38. Further downwards movement of the operating panel 36 causes the flanges 60 to pivot the operating panel 38 a small amount in an anti-clockwise direction to the position shown in Figure 5, against the bias of a spring. Once the flanges 60 clear the cams 62 the operating panel returns under the bias of its spring into the position shown in Figure 6 where the flanges 60 are located beneath the cams 62 and the filter holder is thereby held in the position shown. When the pressure on the operating panel is released the panel returns under the spring bias to the position shown and the filter panel is then in the closed position and light coming through the hood 10 is constrained to pass through the filter.

The filter holder 12 is released by pushing the operating panel 38 to cause it to pivot in an anti-clockwise direction to, or just past the position shown in Figure 5 when the filter holder 12 is free to return to the position shown in Figure 3 under the bias of the spring.

It can be seen that any of the four filters mounted in the filter holders can be moved to the closed position simply by causing pivotal movement of the associated operating panel, and any of the filter panels can be released from the closed position by causing slight pivotal movement of the opposed operating panel.

The filter hood 10 is attached to a camera lens by means of a standard fitting ring (not shown) which is slid in from the right (when viewed in Figure 2) to lie against the underside of the base 22 and above three downwardly and inwardly facing lugs 64. The ring flexes slightly just before it is finally in position, as its periphery rides over a wedge 66, until that wedge is cleared and the ring snaps into position. The lugs 64 and the wedge 66 are only shown in Figures 1 and 2.

The frame, the filter holders and the operating panels may each be formed by injection moulding plastics nylon.

The filters or effects, which can be mounted in the filter holders, may comprise colour transparencies or positive film which may be formed by photographing a particular colour. Alternatively or additionally the filters may comprise diffusers. Accordingly the term filter includes any medium which may have a filtering effect such as film negatives or slides.

**Claims**

1. A filter arrangement including a filter portion (12, 14, 16, 18) connected to a support (20), the filter portion being movable between a first position in which the filter portion is clear of a light path and a second position in which the filter portion extends across a light path.

2. An arrangement as claimed in Claim 1 including retention means (60,62) arranged to retain the filter portion in the second position.

3. An arrangement as claimed in Claim 2 in which the retention means (60,62) are automatically applied when the filter portion moves from the first to the second position.

4. An arrangement as claimed in any preceding claim including a plurality of filter portions (12, 14, 16, 18) each of which are movable between the first and second positions.

5. An arrangement as claimed in Claim 2 or 3 and Claim 4 in which the retention means (60) for one of the filter portions are associated with another filter portion (62).

6. An arrangement as claimed in any preceding claim including basing means (56) arranged to bias the or each carrier from the second to the first position.

7. An arrangement as claimed in any preceding claim including an operating member (36, 38, 40,42) associated with the or each filter portion (12, 14, 16, 18) which, when moved, are capable of moving the associated filter portion from the first to the second position.

8. An arrangement as claimed in any preceding claim in which the or each filter portion (12, 14, 16, 18) moves at least partially in the direction of the light path when moving from the first to the second position.

9. A method of operating a filter arrangement including a filter portion (12, 14, 16, 18) connected to a support (20) comprising moving the filter portion from a first position in which the filter portion is clear of a light path to a second position in which the filter portion extends across a light path.

10. A method as claimed in Claim 9 comprising retaining (60, 62) the filter portion in the second position.

FIG 1

FIG 2

FIG 3

FIG 4

FIG 5

36

14

38

12    60    62

FIG 6

36

14    38

48    46

12    60    62